# EUROPEAN PATENT APPLICATION

(11) **EP 4 769 925 A1**
(43) Date of publication of application: **01.07.2026**
(21) Application number: 24860173.4
(22) Date of filing: 16.07.2024
(51) Int. Cl.: H02M 3/158, H02M 3/157, H02M 1/00, H02M 1/08

(54) **ELECTRONIC DEVICE AND OPERATION METHOD THEREOF**

(30) Priority: 28.08.2023 KR 20230112696; 13.09.2023 KR 20230121606
(71) Applicant: Samsung Electronics Co., Ltd., Suwon-si, Gyeonggi-do 16677 (KR)
(72) Inventor: CHOI, Hangseok, Suwon-si, Gyeonggi-do 16677 (KR); KANG, Sangwoo, Suwon-si, Gyeonggi-do 16677 (KR); LEE, Kyunghwan, Suwon-si, Gyeonggi-do 16677 (KR); CHOI, Kyusik, Suwon-si, Gyeonggi-do 16677 (KR)
(74) Representative: Gulde & Partner
(86) International application number: PCT/KR2024/010181
(87) International publication number: WO 2025/048252

(57) **Abstract**

This electronic device may comprise: a battery; a load; a converter for providing power to the load on the basis of power provided from the battery; a first comparison circuit; a pulse width modulation (PWM) control circuit; a first signal generation circuit; a driving logic circuit; and a controller. The controller may be configured to output a control voltage on the basis of an output voltage of the converter and a target voltage of the output voltage by using the first comparison circuit. The controller may be configured to output a basic signal on the basis of the control voltage and a sawtooth wave by using the PWM control circuit. The controller may be configured to output a turn-on signal on the basis of the basic signal by using the first signal generation circuit. The controller may be configured to output first driving signals on the basis of the basic signal and the turn-on signal by using the driving logic circuit. The controller may be configured to control a plurality of switches of the converter on the basis of the first driving signals. Various other embodiments are possible.

## Description

### [Technical Field]

The disclosure relates to an electronic device and a method for operating the same according to an embodiment.

### [Background Art]

A switching regulator (or a switching converter) is a circuit that converts a direct current (DC) voltage to a DC voltage. A buck converter is used for step-down conversion, a boost converter is used for step-up conversion, and a non-inverting buck-boost converter is used for performing both step-up conversion and step-down conversion. For example, an electronic device including a lithium-ion battery having a voltage between 2.5[V] and 4.5[V] according to a charge state requires a non-inverting buck-boost converter capable of performing both step-up conversion and step-down conversion according to a battery voltage in order to obtain an output voltage of 3.0[V].

The non-inverting buck-boost converter has an advantage of operating stably even at a wide input voltage variation where a buck converter or a boost converter may not operate. However, it has a disadvantage of low efficiency compared to the buck or boost converter due to relatively large currents in an inductor and switches. Therefore, in order to increase a battery usage time by improving efficiency, the converter operates in a buck mode during most voltage periods where an input voltage is higher than an output voltage, operates in a boost mode during most voltage periods where the input voltage is lower than the output voltage, and operates in a buck-boost mode only in a range where the input voltage and the output voltage are similar, rather than operating in the buck-boost mode over an entire battery voltage range.

The above information is presented as related art only to assist with an understanding of the disclosure. No determination has been made, and no assertion is made, as to whether any of the above might be applicable as prior art with regard to the disclosure.

### [Detailed Description of the Invention]

### [Technical Solution]

According to an embodiment, an electronic device may include a battery, a load, a converter configured to provide power to the load based on power provided from the battery, a first comparison circuit, a pulse width modulation (PWM) control circuit, a first signal generating circuit, a drive logic circuit, and a controller. The controller may be configured to output, using the first comparison circuit, a control voltage, based on an output voltage of the converter and a target voltage of the output voltage. The controller may be configured to output, using the PWM control circuit, a basic signal, based on the control voltage and a sawtooth wave. The controller may be configured to output, using the first signal generating circuit, a turn-on signal, based on the basic signal. The controller may be configured to output, using the drive logic circuit, first driving signals, based on the basic signal and the turn-on signal. The controller may be configured to control, based on the first driving signals, a plurality of switches of the converter.

According to an embodiment, a method for operating an electronic device may include outputting a control voltage based on an output voltage of a converter of the electronic device and a target voltage of the output voltage. The method may include outputting a basic signal based on the control voltage and a sawtooth wave. The method may include outputting a turn-on signal based on the basic signal. The method may include outputting first driving signals based on the basic signal and the turn-on signal. The method may include controlling a plurality of switches of the converter based on the first driving signals.

According to an embodiment, in a computer-readable recording medium storing instructions configured to cause a controller of an electronic device to perform at least one operation, the at least one operation may include outputting a control voltage based on an output voltage of a converter of the electronic device and a target voltage of the output voltage. The at least one operation may include outputting a basic signal based on the control voltage and a sawtooth wave. The at least one operation may include outputting a turn-on signal based on the basic signal. The at least one operation may include outputting first driving signals based on the basic signal and the turn-on signal. The at least one operation may include controlling a plurality of switches of the converter based on the first driving signals.

### [Brief Description of Drawings]

FIG. 1 is a block diagram illustrating an electronic device in a network environment according to an embodiment.
FIG. 2 is a block diagram illustrating an electronic device according to an embodiment.
FIG. 3 is a block diagram illustrating an electronic device according to an embodiment.
FIG. 4 is a diagram illustrating an operation of a converter in an electronic device according to an embodiment.
FIG. 5 is a diagram illustrating an operation of a converter in an electronic device according to an embodiment.
FIG. 6 is a diagram illustrating an operation of a converter in an electronic device according to an embodiment.
FIG. 7 is a diagram illustrating an operation of a converter in an electronic device according to a comparative example.
FIG. 8 is a circuit diagram illustrating circuits included in an electronic device according to an embodiment.
FIG. 9 is a block diagram illustrating an electronic device according to an embodiment.
FIG. 10 is a block diagram illustrating an electronic device according to an embodiment.
FIG. 11 is a block diagram illustrating an electronic device according to an embodiment.
FIG. 12 is a diagram illustrating an operation of an electronic device according to an embodiment.
FIG. 13 is a diagram illustrating an operation of an electronic device according to an embodiment.
FIG. 14 is a diagram illustrating an operation of an electronic device according to an embodiment.
FIG. 15 is a flowchart illustrating a method for operating an electronic device according to an embodiment.
FIG. 16 is a flowchart illustrating a method for operating an electronic device according to an embodiment.

### [Mode for Carrying out the Invention]

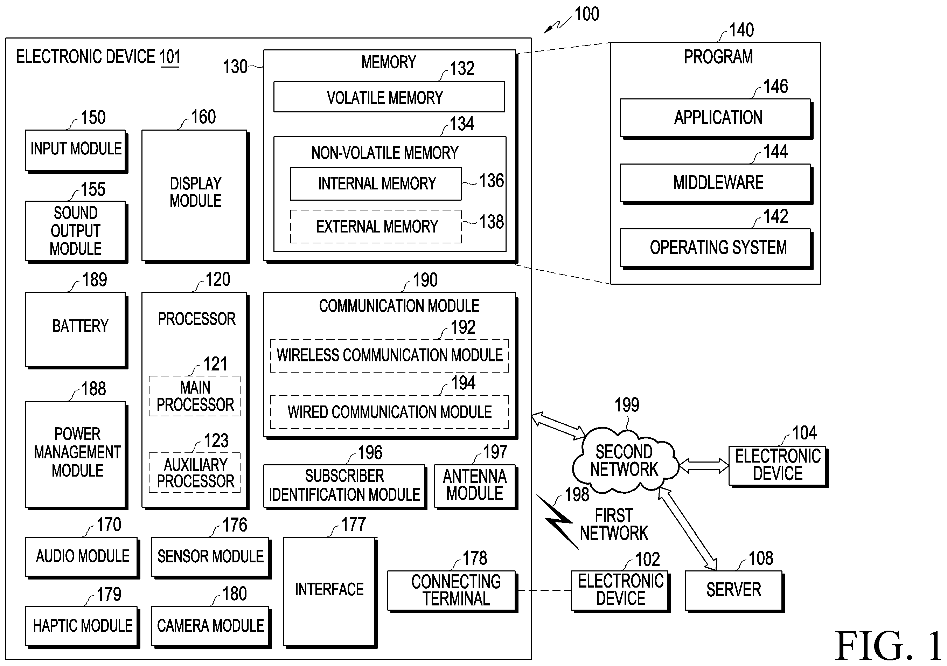

FIG. 1 is a block diagram illustrating an electronic device in a network environment according to an embodiment.

Referring to FIG. 1, an electronic device 101 in a network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the strength of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

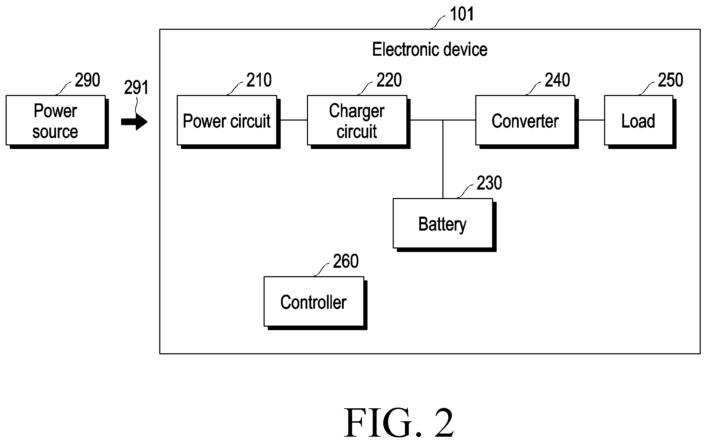

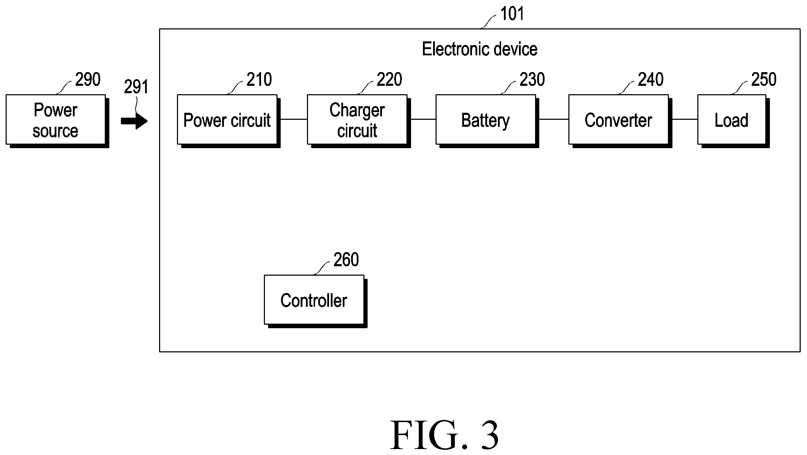

FIG. 2 is a block diagram illustrating an electronic device according to an embodiment. FIG. 3 is a block diagram illustrating an electronic device according to an embodiment.

According to an embodiment, the electronic device 101 may be a device (e.g., a notebook computer, a tablet, a portable communication device (e.g., a smartphone), a computer device, a portable multimedia device, a portable medical device, a camera, a wearable device, or a home appliance) that receives power 291 from a power source 290. The power source 290 may be a device (e.g., a wired charging device or wireless charging device) that provides the power 291 (e.g., wired power or wireless power) to the electronic device 101. The power source 290 may be a device (e.g., an adapter) that transmits external power to the electronic device 101. The type of the power source 290 is not limited as a device that provides power. The type of the electronic device 101 is not limited as a device that receives power.

Referring to FIGS. 2 and 3, according to an embodiment, the electronic device 101 may include a power circuit 210, a charger circuit 220, a battery 230, a converter 240, a load 250, and a controller 260. A connection structure of the charger circuit 220, the battery 230, and the converter 240 included in the electronic device 101 may be understood by referring to FIGS. 2 and 3. Referring to FIG. 2, an output end of the charger circuit 220 may be electrically connected to an input end of the converter 240 and the battery 230. Referring to FIG. 3, the output end of the charger circuit 220 may be electrically connected to an input end of the battery 230, and an output end of the battery 230 may be electrically connected to the input end of the converter 240. The connection structure of the charger circuit 220, the battery 230, and the converter 240 is not limited to the embodiments of FIGS. 2 and 3.

An operation of the electronic device 101 according to an embodiment may be controlled by the controller 260 (e.g., the processor 120 of FIG. 1) of the electronic device 101. When it is said that the electronic device 101 performs a specific operation, this may mean that the electronic device 101 or a component included in the electronic device 101 is controlled by the controller 260 of the electronic device 101. The electronic device 101 may include one or more controllers 260. Hereinafter, for convenience of description, even when the controller 260 is implemented as a plurality of controllers, it will be referred to as an "operation of the electronic device 101" or an "operation of the controller 260".

According to an embodiment, the electronic device 101 (e.g., the controller 260) may receive power (e.g., wired power or wireless power) provided from the power source 290 through the power circuit 210. For example, the power circuit 210 may include a wired power circuit (e.g., a circuit including a wired connector) and/or a wireless power circuit (e.g., a circuit including a reception coil and a rectifier).

According to an embodiment, the electronic device 101 (e.g., the controller 260) may provide power to the charger circuit 220 through the power circuit 210. The electronic device 101 (e.g., the controller 260) may provide power to the battery 230 through the charger circuit 220. The charger circuit 220 may be a circuit that provides power to the battery 230 based on power provided from the external power source 290. The charger circuit 220 may receive power from the power circuit 210. The charger circuit 220 may provide power to the battery 230 based on the power provided from the power circuit 210. The charger circuit 220 may convert an input voltage to an output voltage. The output voltage of the charger circuit 220 may be an input voltage (e.g., charging voltage) of the battery 230. The battery 230 may be charged based on the output voltage (e.g., charging voltage) of the charger circuit 220.

According to an embodiment, the electronic device 101 (e.g., the controller 260) may provide power to the load 250 through the converter 240. The load 250 may be one of the components of the electronic device 101, which consumes power. The converter 240 may provide power to the load 250 based on the power provided to the converter 240. Referring to FIG. 2, for example, the converter 240 may receive power from the battery 230. Referring to FIG. 2, for example, the converter 240 may receive power from the charger circuit 220. Referring to FIG. 3, the converter 240 may receive power from the battery 230. The converter 240 may convert an input voltage of the converter 240 to a voltage suitable for the load 250 electrically connected to it. Although FIGS. 2 and 3 illustrate a single converter 240 and a single load 250, this is for convenience of description, and the numbers of converters 240 and loads 250 are not limited. For example, referring to FIG. 2, when there are two converters 240 and two loads 250, an input end of a first converter may be connected to the output end of the charger circuit 220 and the battery 230, a first load may be connected to an output end of the first converter, an input end of a second converter may be connected to the output end of the charger circuit 220 and the battery 230, and a second load may be connected to an output end of the second converter. In this case, multiple converters 240 may be electrically connected to the output end of the charger circuit 220 and the battery 230. Referring to FIG. 3, for example, when there are two converters 240 and two loads 250, the input end of the first converter may be connected to the battery 230, the first load may be connected to the output end of the first converter, the input end of the second converter may be connected to the battery 230, and the second load may be connected to the output end of the second converter. In this case, multiple converters 240 may be electrically connected to the battery 230.

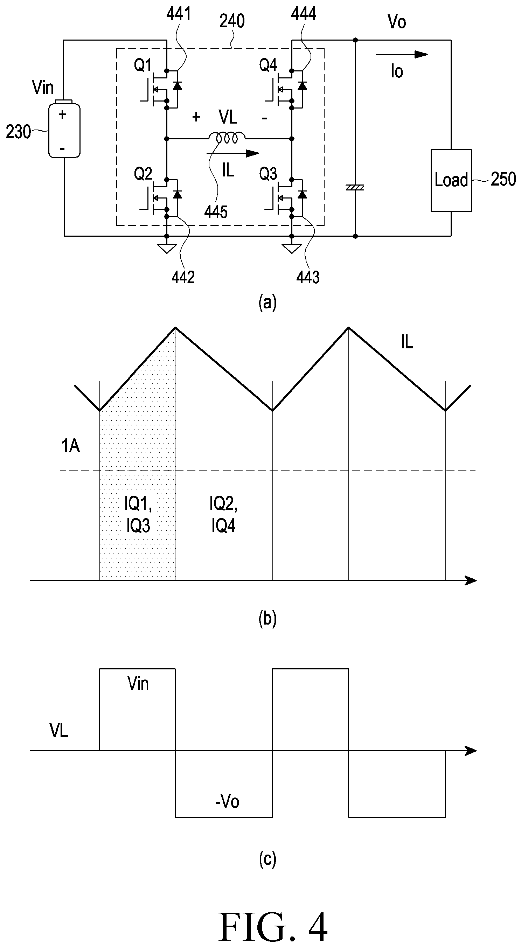

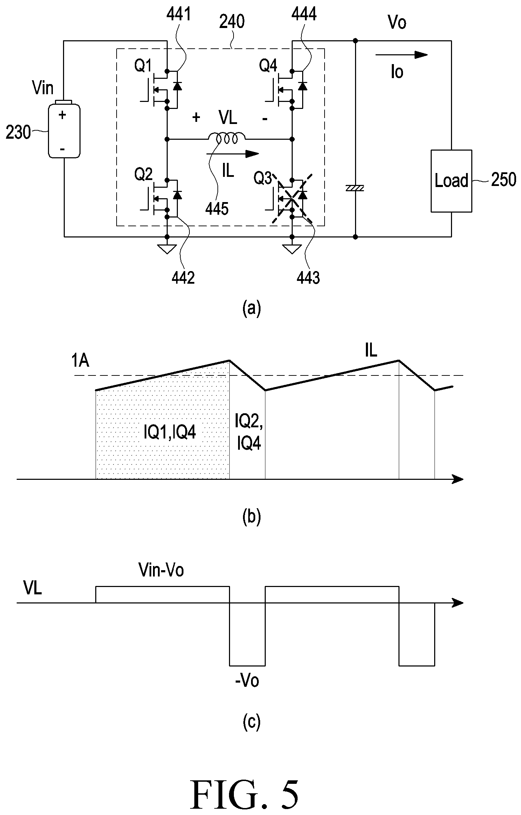

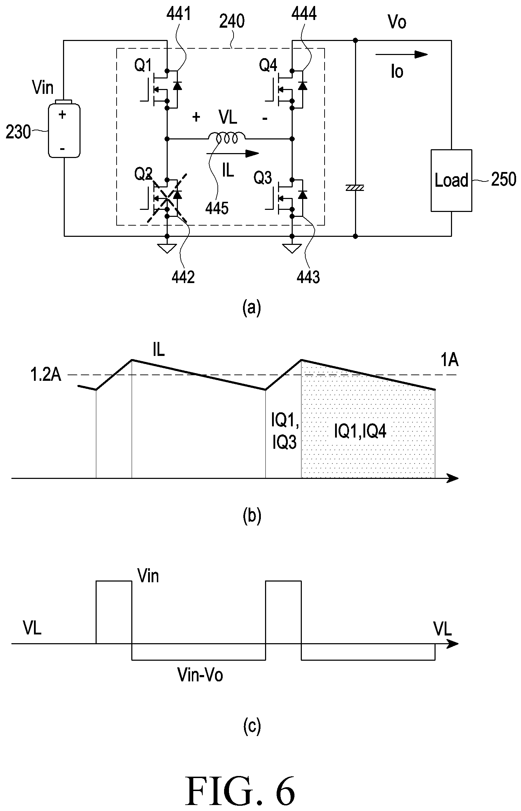

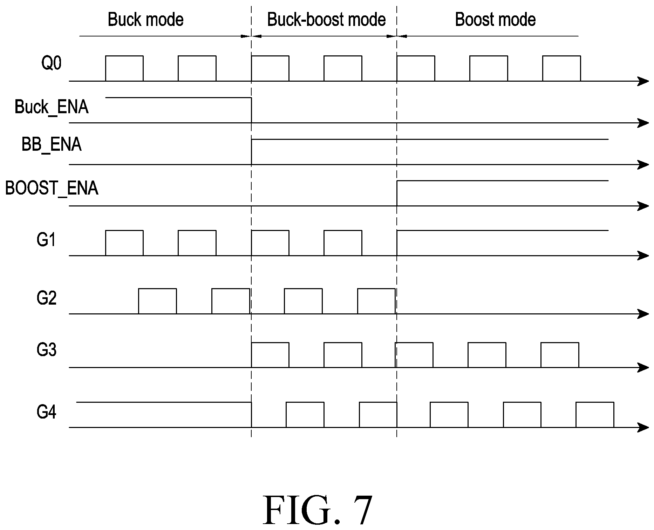

FIG. 4 is a diagram illustrating an operation of a converter in an electronic device according to an embodiment. FIG. 5 is a diagram illustrating an operation of a converter in an electronic device according to an embodiment. FIG. 6 is a diagram illustrating an operation of a converter in an electronic device according to an embodiment. FIG. 7 is a diagram illustrating an operation of a converter in an electronic device according to an embodiment.

Referring to (a) of FIG. 4, according to an embodiment, the converter 240 may be implemented as a buck-boost converter. The converter 240 may include a plurality of switches 441, 442, 443, and 444 (e.g., Q1, Q2, Q3, and Q4) and at least one inductor 445. The plurality of switches 441, 442, 443, and 444 (e.g., Q1, Q2, Q3, and Q4) may include a first switch 441 (e.g., Q1), a second switch 442 (e.g., Q2), a third switch 443 (e.g., Q3), and a fourth switch 444 (e.g., Q4). The electronic device 101 (e.g., the controller 260) may control the converter 240 to perform buck converting, boost converting, or buck-boost conversion by controlling the plurality of switches 441, 442, 443, and 444 (e.g., Q1, Q2, Q3, and Q4) of the converter 240. The electronic device 101 (e.g., the controller 260) may control the plurality of switches 441, 442, 443, and 444 (e.g., Q1, Q2, Q3, and Q4) of the converter 240 based on an operation mode (e.g., buck mode, boost mode, or buck-boost mode) of the converter 240. For example, for buck conversion (e.g., buck mode or buck operation), the electronic device 101 (e.g., the controller 260) may perform pulse width modulation (PWM) switching on Q1 and Q2 (e.g., controlling them alternately), control Q4 to an ON state, and control Q3 to an OFF state. For example, for boost conversion (e.g., boost mode or boost operation), the electronic device 101 (e.g., the controller 260) may perform PWM switching on Q3 and Q4, control Q1 to an ON state, and control Q2 to an OFF state. For example, for buck-boost conversion (e.g., buck-boost mode or buck-boost operation), the electronic device 101 (e.g., the controller 260) may perform PWM switching on Q1 and Q2, perform PWM switching on Q3 and Q4, switch Q1 and Q3 identically, and switch Q2 and Q4 identically. For example, for buck-boost conversion (e.g., buck-boost mode or buck-boost operation), the electronic device 101 (e.g., the controller 260) may perform PWM switching (e.g., alternate control) on a first pair of Q1 and Q3 and a second pair of Q2 and Q4.

For example, buck-boost conversion (e.g., buck-boost mode or buck-boost operation) may be understood with reference to FIG. 4. Referring to (a) of FIG. 4, for buck-boost conversion (e.g., buck-boost mode or buck-boost operation), the electronic device 101 (e.g., the controller 260) may alternately control the first switch 441 and the second switch 442, alternately control the third switch 443 and the fourth switch 444, control the first switch 441 and the third switch 443 identically, and control the second switch 442 and the fourth switch 444 identically. (b) and (c) of FIG. 4 are graphs illustrating a current (e.g., IL) and voltage (VL) of at least one inductor 445 included in the converter 240, when the operation mode of the converter 240 is the buck-boost mode. Referring to (c) of FIG. 4, when the operation mode of the converter 240 is the buck-boost mode, the voltage (e.g., VL) of the at least one inductor 445 may be a voltage (e.g., Vin) of the battery 230, while the first switch 441 and the third switch 443 are controlled to be ON. Referring to (c) of FIG. 4, when the operation mode of the converter 240 is the buck-boost mode, the voltage (e.g., VL) of the at least one inductor 445 may be a reverse voltage (e.g., -Vo) of a voltage (e.g., Vo) of the load 250, while the second switch 442 and the fourth switch 444 are controlled to be ON. Referring to (b) of FIG. 4, when the operation mode of the converter 240 is the buck-boost mode, a current (e.g., IQ1) of the first switch 441, the current (e.g., IL) of the at least one inductor 445, and a current (e.g., IQ3) of the third switch 443 may increase, while the first switch 441 and the third switch 443 are controlled to be ON. Referring to (b) of FIG. 4, when the operation mode of the converter 240 is the buck-boost mode, a current (e.g., IQ2) of the second switch 442, the current (e.g., IL) of the at least one inductor 445, and a current (e.g., IQ4) of the fourth switch 444 may decrease, while the second switch 442 and the fourth switch 444 are controlled to be ON. Referring to (b) of FIG. 4, when the operation mode of the converter 240 is the buck-boost mode, as a first pair (e.g., 441 and 443) and a second pair (e.g., 442 and 444) among the plurality of switches 441, 442, 443, and 444 of the converter 240 are alternately controlled, the current (e.g., IL) of the at least one inductor 445 may repeat increasing and decreasing around a current (e.g., 2[A]) larger than a target current (e.g., 1[A]).

For example, buck conversion (e.g., buck mode or buck operation) may be understood with reference to FIG. 5. Referring to (a) of FIG. 5, for buck conversion (e.g., buck mode or buck operation), the electronic device 101 (e.g., the controller 260) may alternately control the first switch 441 and the second switch 442, control the third switch 443 to be OFF, and control the fourth switch 444 to be ON. (b) and (c) of FIG. 5 are graphs illustrating the current (e.g., IL) and voltage (VL) of the at least one inductor 445 included in the converter 240, when the operation mode of the converter 240 is the buck mode. Referring to (c) of FIG. 5, when the operation mode of the converter 240 is the buck mode, the voltage (e.g., VL) of the at least one inductor 445 may be the difference (e.g., Vin-Vo) between the voltage (e.g., Vin) of the battery 230 and the voltage (e.g., Vo) of the load 250, while the first switch 441 and the fourth switch 444 are controlled to be ON. Referring to (c) of FIG. 5, when the operation mode of the converter 240 is the buck mode, the voltage (e.g., VL) of the at least one inductor 445 may be the reverse voltage (e.g., -Vo) of the voltage (e.g., Vo) of the load 250, while the second switch 442 and the fourth switch 444 are controlled to be ON. Referring to (b) of FIG. 5, when the operation mode of the converter 240 is the buck mode, the current (e.g., IQ1) of the first switch 441, the current (e.g., IL) of the at least one inductor 445, and the current (e.g., IQ4) of the fourth switch 444 may increase, while the first switch 441 and the fourth switch 444 are controlled to be ON. Referring to (b) of FIG. 5, when the operation mode of the converter 240 is the buck mode, the current (e.g., IQ2) of the second switch 442, the current (e.g., IL) of the at least one inductor 445, and the current (e.g., IQ4) of the fourth switch 444 may decrease, while the second switch 442 and the fourth switch 444 are controlled to be ON. Referring to (b) of FIG. 5, when the operation mode of the converter 240 is the buck mode, as the first switch 441 and the second switch 442 among the plurality of switches 441, 442, 443, and 444 of the converter 240 are alternately controlled, the third switch 443 is controlled to be OFF, and the fourth switch 444 is controlled to be ON, the current (e.g., IL) of the at least one inductor 445 may repeat increasing and decreasing around the target current (e.g., 1 [A]). According to an embodiment, referring to FIGS. 4 and 5, a duty cycle when the operation mode of the converter 240 is the buck-boost mode and a duty cycle when the operation mode of the converter 240 is the buck mode may be different. The duty cycle when the operation mode of the converter 240 is the buck-boost mode and the duty cycle when the operation mode of the converter 240 is the buck mode may also be the same.

For example, boost conversion (e.g., boost mode or boost operation) may be understood with reference to FIG. 6. Referring to (a) of FIG. 6, for boost conversion (e.g., boost mode or boost operation), the electronic device 101 (e.g., the controller 260) may alternately control the third switch 443 and the fourth switch 444, control the second switch 442 to be OFF, and control the first switch 441 to be ON. (b) and (c) of FIG. 6 are graphs illustrating the current (e.g., IL) and voltage (VL) of the at least one inductor 445 included in the converter 240, when the operation mode of the converter 240 is the boost mode. Referring to (c) of FIG. 6, when the operation mode of the converter 240 is the boost mode, the voltage (e.g., VL) of the at least one inductor 445 may be the voltage (e.g., Vin) of the battery 230, while the first switch 441 and the third switch 443 are controlled to be ON. Referring to (c) of FIG. 5, when the operation mode of the converter 240 is the boost mode, the voltage (e.g., VL) of the at least one inductor 445 may be the difference (e.g., Vin-Vo) between the voltage (e.g., Vin) of the battery 230 and the voltage (e.g., Vo) of the load 250, while the first switch 441 and the fourth switch 444 are controlled to be ON. Referring to (b) of FIG. 6, when the operation mode of the converter 240 is the boost mode, the current (e.g., IQ1) of the first switch 441, the current (e.g., IL) of the at least one inductor 445, and the current (e.g., IQ3) of the third switch 443 may increase, while the first switch 441 and the third switch 443 are controlled to be ON. Referring to (b) of FIG. 6, when the operation mode of the converter 240 is the boost mode, the current (e.g., IQ1) of the first switch 441, the current (e.g., IL) of the at least one inductor 445, and the current (e.g., IQ4) of the fourth switch 444 may decrease, while the first switch 441 and the fourth switch 444 are controlled to be ON. Referring to (b) of FIG. 6, when the operation mode of the converter 240 is the boost mode, as the third switch 443 and the fourth switch 444 among the plurality of switches 441, 442, 443, and 444 of the converter 240 are alternately controlled, the second switch 442 is controlled to be OFF, and the first switch 441 is controlled to be ON, the current (e.g., IL) of the at least one inductor 445 may repeat increasing and decreasing around the target current (e.g., 1[A]). According to an embodiment, referring to FIG. 5 and FIG. 5, the duty cycle when the operation mode of the converter 240 is the buck-boost mode and the duty cycle when the operation mode of the converter 240 is the boost mode may be different. The duty cycle when the operation mode of the converter 240 is the buck-boost mode and the duty cycle when the operation mode of the converter 240 is the boost mode may also be the same.

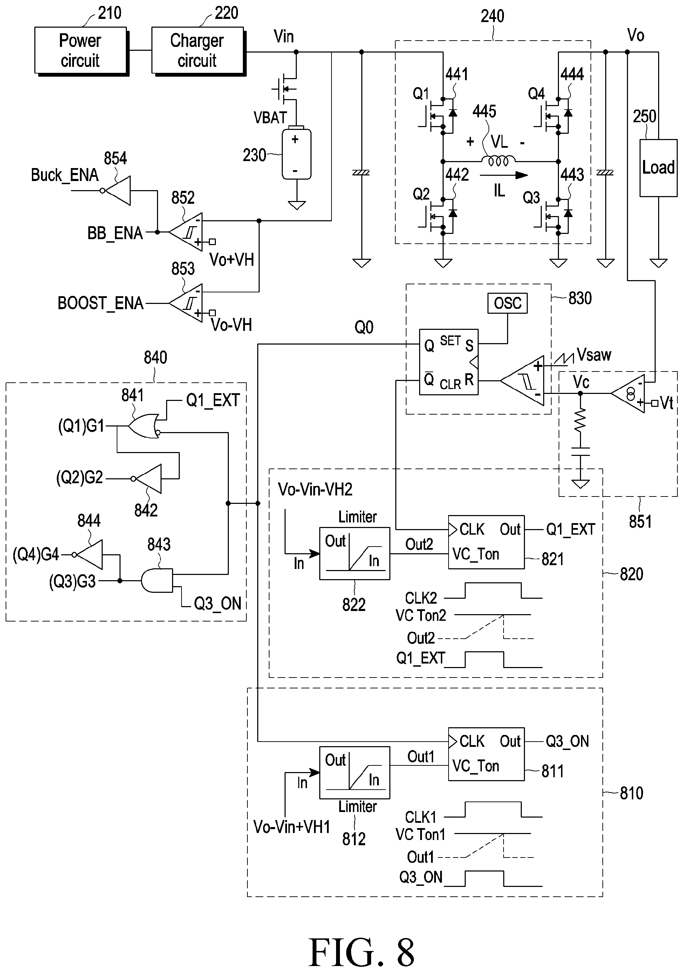

FIG. 7 is a diagram illustrating an operation of an electronic device according to a comparative example. FIG. 8 is a circuit diagram illustrating circuits included in an electronic device according to an embodiment.

FIG. 8 is a circuit diagram illustrating circuits included in an electronic device 101 including a first signal generating circuit 810 and a second signal generating circuit 820 according to an embodiment. FIG. 7 is a diagram illustrating an operation of an electronic device 101 without the first signal generating circuit 810 and the second signal generating circuit 820 according to a comparative example.

Referring to FIG. 7, according to the comparative example, the electronic device 101 may not include the first signal generating circuit 810 and the second signal generating circuit 820. Referring to FIGS. 7 and 8, according to the comparative example, the electronic device 101 without the first signal generating circuit 810 and the second signal generating circuit 820 may include a first comparison circuit 851, a PWM control circuit 830, a drive logic circuit 840, a second comparison circuit 852, a third comparison circuit 853, and a NOT gate 854 of FIG. 8. According to the comparative example, in the electronic device 101 without the first signal generating circuit 810 and the second signal generating circuit 820, input signals (e.g., Q3_ON and Q1_EXT) of the drive logic circuit 840 disclosed in FIG. 8 may be changed to other input signals (e.g., BB_ENA and BOOST_ENA), respectively.

Referring to FIG. 7, according to the comparative example, the electronic device 101 may output a Buck_ENA signal, based on the input voltage (e.g., Vin) of the converter 240 being greater than the sum (e.g., Vo + VH) of the output voltage (e.g., Vo) of the converter 240 and a specified voltage (e.g., VH), using the second comparison circuit 852, the third comparison circuit 853, and the NOT gate 854. According to the comparative example, since the input signals of the drive logic circuit 840 are BB_ENA and BOOST_ENA, the operation mode of the converter 240 may be the buck mode based on the output of the Buck_ENA signal. In the buck mode, the electronic device 101 (e.g., the controller 260) may alternately control the first switch 441 and the second switch 442, control the third switch 443 to be OFF, and control the fourth switch 444 to be ON.

Referring to FIG. 7, according to the comparative example, the electronic device 101 may output a BB_ENA signal, based on the input voltage (e.g., Vin) of the converter 240 being smaller than the sum (e.g., Vo + VH) of the output voltage (e.g., Vo) of the converter 240 and the specified voltage (e.g., VH) and being larger than the difference (e.g., Vo - VH) between the output voltage (e.g., Vo) of the converter 240 and the specified voltage (e.g., VH), using the second comparison circuit 852, the third comparison circuit 853, and the NOT gate 854. According to the comparative example, since the input signals of the drive logic circuit 840 are BB_ENA and BOOST_ENA, the operation mode of the converter 240 may be the buck-boost mode based on the output of the BB_ENA signal. In the buck-boost mode, the electronic device 101 (e.g., the controller 260) may alternately control the first switch 441 and the second switch 442, alternately control the third switch 443 and the fourth switch 444, control the first switch 441 and the third switch 443 identically, and control the second switch 442 and the fourth switch 444 identically.

Referring to FIG. 7, according to the comparative example, the electronic device 101 may output the BB_ENA signal and the BOOST_ENA signal, based on the input voltage (e.g., Vin) of the converter 240 being smaller than the difference (e.g., Vo - VH) between the output voltage (e.g., Vo) of the converter 240 and the specified voltage (e.g., VH), using the second comparison circuit 852, the third comparison circuit 853, and the NOT gate 854. According to the comparative example, since the input signals of the drive logic circuit 840 are BB_ENA and BOOST_ENA, the operation mode of the converter 240 may be the boost mode based on the output of the BB_ENA signal and the BOOST_ENA signal. In the boost mode, the electronic device 101 (e.g., the controller 260) may control the first switch 441 to be ON, control the second switch 442 to be OFF, and alternately control the third switch 443 and the fourth switch 444.

Referring to FIG. 7, according to the comparative example, when the buck mode is switched to the buck-boost mode, the duty cycles of the third switch 443 and the fourth switch 444 may change abruptly, and when the buck-boost mode is switched to the boost mode, the duty cycles of the first switch 441 and the second switch 442 may change abruptly. Based on the abrupt change in the duty cycles of the switches (e.g., 441, 442, 443, and 444), ripple may occur in the output voltage (e.g., Vo) of the converter 240.

Referring to FIG. 8, according to an embodiment, the electronic device 101 may include the first comparison circuit 851. The electronic device 101 (e.g., the controller 260) may output a control voltage (e.g., Vc) using the first comparison circuit 851. The first comparison circuit 851 may output the control voltage (e.g., Vc) based on the output voltage (e.g., Vo) of the converter 240 and a target voltage (e.g., Vt) of the output voltage of the converter 240. The output voltage (e.g., Vo) of the converter 240 may be the voltage of power provided from the converter 240 to the load 250. The target voltage (e.g., Vt) of the output voltage of the converter 240 may be determined based on the load 250. For example, to provide a voltage of 3[V] to the load 250, the target voltage (e.g., Vt) of the output voltage of the converter 240 may be determined to be 3[V]. The electronic device 101 (e.g., the controller 260) may output the control voltage (e.g., Vc) based on the output voltage (e.g., Vo) of the converter 240 and the target voltage (e.g., Vt), using the first comparison circuit 851. The electronic device 101 (e.g., the controller 260) may output the control voltage (e.g., Vc) based on the difference between the output voltage (e.g., Vo) of the converter 240 and the target voltage (e.g., Vt), and an integral value of the difference, using the first comparison circuit 851. The first comparison circuit 851 may output the control voltage (e.g., Vc) by adding the difference between the output voltage (e.g., ELVDD) of the converter 240 and the target voltage (e.g., Vt) to the integral value of the difference.

Referring to FIG. 8, according to an embodiment, the electronic device 101 may include the PWM control circuit 830. The electronic device 101 (e.g., the controller 260) may output a basic signal (e.g., a basic PWM signal Q0) using the PWM control circuit 830. The PWM control circuit 830 may output the basic signal (e.g., Q0) based on the control voltage (e.g., Vc) and a sawtooth wave (e.g., Vsaw). The PWM control circuit 830 may include a comparator, an oscillator OSC, and a controller. As the controller of the PWM control circuit 830 outputs the basic signal in response to a signal from the oscillator OSC, and is reset based on a signal output using the comparator based on the control voltage (e.g., Vc) and the sawtooth wave (e.g., Vsaw), the PWM control circuit may output the basic signal (e.g., the basic PWM signal Q0). Referring to FIG. 8, the drive logic circuit 840 and the first signal generating circuit 810 may receive the basic signal (e.g., Q0) output from the PWM control circuit 830, and the second signal generating circuit 820 may receive an inversion of the basic signal (e.g., Q0).

According to an embodiment, the electronic device 101 may include the first signal generating circuit 810. The electronic device 101 (e.g., the controller 260) may output a turn-on signal (e.g., Q3_ON) using the first signal generating circuit 810. The first signal generating circuit 810 may output the turn-on signal (e.g., Q3_ON) based on the basic signal (e.g., Q0) of the PWM control circuit 830. The first signal generating circuit 810 may include a first limiter 812 and a first one-shot vibrator 811. The first limiter 812 may output a first output signal, based on a first value (e.g., Vo-Vin+VH1) obtained by subtracting the input voltage (e.g., Vin) of the converter 240 from the sum of the output voltage (e.g., Vo) of the converter 240 and a first reference voltage (e.g., VH1). The first limiter 812 may not output a signal (e.g., may output 0), based on the first value (e.g., Vo-Vin+VH1) being 0 or less. The first limiter 812 may output a signal proportional to the first value (e.g., Vo-Vin+VH1), based on the first value (e.g., Vo-Vin+VH1) exceeding 0 and being less than or equal to a first reference value. The first limiter 812 may output a signal proportional to the first reference value (e.g., a signal corresponding to the first reference value), based on the first value (e.g., Vo-Vin+VH1) exceeding the first reference value. The first one-shot vibrator 811 may output the turn-on signal (e.g., Q3_ON) based on the first output signal of the first limiter 812 and the basic signal (e.g., Q0) of the PWM control circuit 830. The electronic device 101 (e.g., the controller 260) may output the turn-on signal (e.g., Q3_ON) using the first signal generating circuit 810, based on the input voltage of the converter 240 being less than the sum of the output voltage and the first reference voltage. The duty cycle of the turn-on signal (e.g., Q3_ON) may be determined based on a value obtained by subtracting the input voltage (e.g., Vini) from the sum of the output voltage (e.g., Vo) and the first reference voltage (e.g., VH1). While the first value (e.g., Vo-Vin+VH1) increases as the input voltage (e.g., Vin) of the converter 240 decreases, the duty cycle of the turn-on signal (e.g., Q3_ON) output from the first signal generating circuit 810 may increase.

According to an embodiment, the electronic device 101 may include the first signal generating circuit 810 and may not include the second signal generating circuit 820. According to an embodiment, the electronic device 101 may include the first signal generating circuit 810 and the second signal generating circuit 820. The electronic device 101 (e.g., the controller 260) may output an extension signal (e.g., Q1_EXT) using the second signal generating circuit 820. The second signal generating circuit 820 may output the extension signal (e.g., Q1_EXT) based on an inversion (e.g., Q0-) of the basic signal (e.g., Q0) of the PWM control circuit 830. The second signal generating circuit 820 may include a second limiter 822 and a second one-shot vibrator 821. The second limiter 822 may output a second output signal based on a second value (e.g., Vo-Vin-VH2) obtained by subtracting the input voltage (e.g., Vin) of the converter 240 from the difference between the output voltage (e.g., Vo) of the converter 240 and a second reference voltage (e.g., VH2). The second reference voltage (e.g., VH2) may be the same as or different from the first reference voltage (e.g., VH1). The second limiter 822 may not output a signal (e.g., may output 0), based on the second value (e.g., Vo-Vin-VH2) being 0 or less. The second limiter 822 may output a signal proportional to the second value (e.g., Vo-Vin-VH2), based on the second value (e.g., Vo-Vin-VH2) exceeding 0 and being less than or equal to a second reference value. The second reference value may be the same as or different from the first reference value. The second limiter 822 may output a signal proportional to the second reference value (e.g., a signal corresponding to the second reference value), based on the second value (e.g., Vo-Vin-VH2) exceeding the second reference value. The second one-shot vibrator 821 may output the extension signal (e.g., Q1_EXT) based on the second output signal of the second limiter 822 and the inversion (e.g., Q0-) of the basic signal (e.g., Q0) of the PWM control circuit 830. The electronic device 101 (e.g., the controller 260) may output the extension signal (e.g., Q1_EXT) using the second signal generating circuit 820, based on the input voltage of the converter 240 being less than a value obtained by subtracting the second reference voltage from the output voltage of the converter 240. The duty cycle of the extension signal (e.g., Q1_EXT) may be determined based on a value obtained by subtracting the input voltage from the value obtained by subtracting the second reference voltage from the output voltage. While the second value (e.g., Vo-Vin-VH2) increases as the input voltage (e.g., Vin) of the converter 240 decreases, the duty cycle of the extension signal (e.g., Q1_EXT) output from the second signal generating circuit 820 may increase.

According to an embodiment, the basic signal (e.g., Q0) of the PWM control circuit 830 may be provided to the drive logic circuit 840. The turn-on signal (e.g., Q3_ON) of the first signal generating circuit 810 may be provided to the drive logic circuit 840. The extension signal (e.g., Q1_EXT) of the second signal generating circuit 820 may be provided to the drive logic circuit 840. The drive logic circuit 840 may include an AND gate 843 that outputs a driving signal (e.g., G3) corresponding to the third switch 443 (e.g., Q3) based on the basic signal (e.g., Q0) and the turn-on signal (e.g., Q3_ON). The drive logic circuit 840 may include a NOT gate 844 that outputs a driving signal (e.g., G4) corresponding to the fourth switch 444 (e.g., Q4) by inverting the signal output from the AND gate 843. The drive logic circuit 840 may include an OR gate 841 that outputs a driving signal (e.g., G1) corresponding to the first switch 441 (e.g., Q1), based on the basic signal (e.g., Q0) and the extension signal (e.g., Q1 _EXT). The drive logic circuit 840 may include a NOT gate 842 that outputs a driving signal (e.g., G2) corresponding to the second switch 442 (e.g., Q2) by inverting the signal output from the OR gate 841. The embodiment of FIG. 8 is only an example, and a combination of a plurality of logic circuits outputting the same driving signals as the drive logic circuit 840 of FIG. 8 may be possible. The electronic device 101 (e.g., the controller 260) may control the plurality of switches (e.g., 441, 442, 443, and 444) of the converter 240 based on the driving signals output from the drive logic circuit 840.

According to an embodiment, based on the turn-on signal (e.g., Q3_ON) occurring for a time proportional to the difference between the output voltage and the input voltage of the converter 240 based on the basic signal (e.g., Q0) of the PWM control circuit 830, the duty cycle of the third switch 443 may gradually increase and the duty cycle of the fourth switch 444 may gradually decrease. When the operation mode of the converter 240 is switched from the buck mode to the buck-boost mode, the duty cycle of the third switch 443 may gradually increase and the duty cycle of the fourth switch 444 may gradually decrease, based on the turn-on signal (e.g., Q3_ON). Based on the gradual increase of the duty cycle of the third switch 443 and the gradual decrease of the duty cycle of the fourth switch 444, the operation mode of the converter 240 may be gradually switched from the buck mode to the buck-boost mode. Based on a first soft transition mode corresponding to the turn-on signal (e.g., Q3_ON), the operation mode of the converter 240 may be gradually switched from the buck mode to the buck-boost mode. Based on the first soft transition mode corresponding to the turn-on signal (e.g., Q3_ON) occurring between the buck mode and the buck-boost mode, the operation mode of the converter 240 may be gradually switched from the buck mode to the buck-boost mode. Based on the first soft transition mode, ripple of the output voltage (e.g., Vo) of the converter 240, which occurs when the operation mode of the converter 240 is abruptly switched from the buck mode to the buck-boost mode, may be reduced.

According to an embodiment, based on the extension signal (e.g., Q1_EXT) occurring for a time proportional to the difference between the output voltage and the input voltage of the converter 240 based on the inversion (e.g., Q0-) of the basic signal (e.g., Q0) of the PWM control circuit 830, the duty cycle of the first switch 441 may gradually increase and the duty cycle of the second switch 442 may gradually decrease. When the operation mode of the converter 240 is switched from the buck-boost mode to the boost mode, the duty cycle of the first switch 441 may gradually increase and the duty cycle of the second switch 442 may gradually decrease, based on the extension signal (e.g., Q1_EXT). Based on the gradual increase of the duty cycle of the first switch 441 and the gradual decrease of the duty cycle of the second switch 442, the operation mode of the converter 240 may be gradually switched from the buck-boost mode to the boost mode. Based on a second soft transition mode corresponding to the extension signal (e.g., Q1_EXT), the operation mode of the converter 240 may be gradually switched from the buck-boost mode to the boost mode. Based on the second soft transition mode corresponding to the extension signal (e.g., Q1_EXT) occurring between the buck-boost mode and the boost mode, the operation mode of the converter 240 may be gradually switched from the buck-boost mode to the boost mode. Based on the second soft transition mode, ripple of the output voltage (e.g., Vo) of the converter 240, which occurs when the operation mode of the converter 240 is abruptly switched from the buck-boost mode to the boost mode, may be reduced.

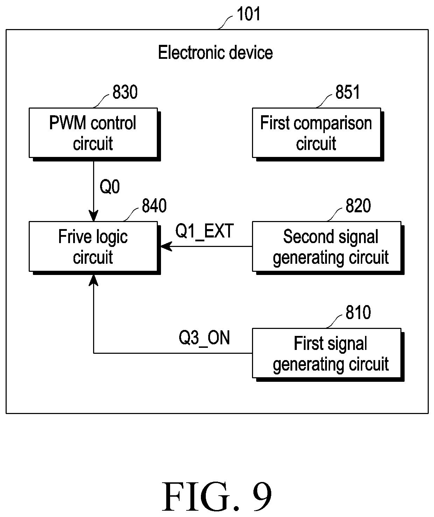

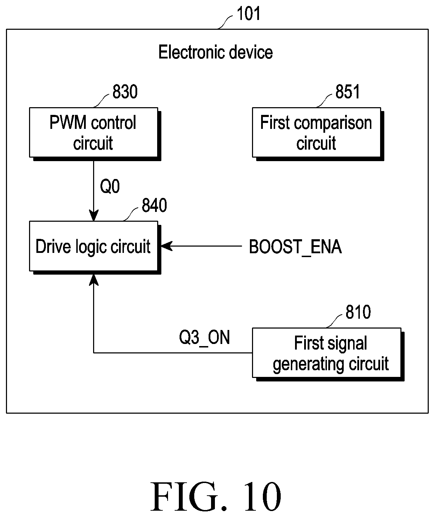

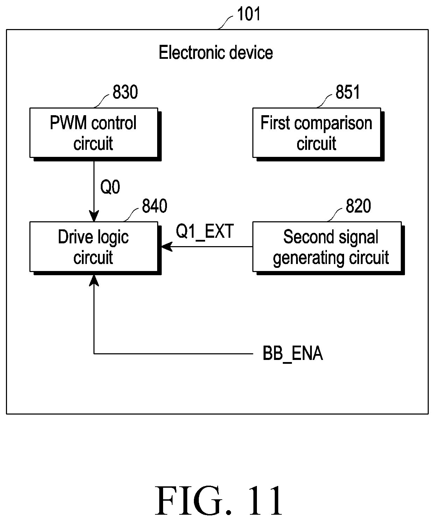

FIG. 9 is a block diagram illustrating an electronic device according to an embodiment. FIG. 10 is a block diagram illustrating an electronic device according to an embodiment. FIG. 11 is a block diagram illustrating an electronic device according to an embodiment.

Referring to FIG. 9, an embodiment in which the electronic device 101 includes the first signal generating circuit 810 and the second signal generating circuit 820 may be understood. In FIG. 9, when the operation mode of the converter 240 is switched from the buck mode to the buck-boost mode, the drive logic circuit 840 may output first driving signals based on the basic signal (e.g., Q0) of the PWM control circuit 830 and the turn-on signal (e.g., Q3_ON) of the first signal generating circuit 810, and when the operation mode of the converter 240 is switched from the buck-boost mode to the boost mode, the drive logic circuit 840 may output second driving signals based on the basic signal (e.g., Q0) of the PWM control circuit 830, the turn-on signal (e.g., Q3_ON) of the first signal generating circuit 810, and the extension signal (e.g., Q1_EXT) of the second signal generating circuit 820.

Referring to FIG. 10, an embodiment in which the electronic device 101 includes the first signal generating circuit 810 may be understood. In FIG. 10, when the operation mode of the converter 240 is switched from the buck mode to the buck-boost mode, the drive logic circuit 840 may output the first driving signals based on the basic signal (e.g., Q0) of the PWM control circuit 830 and the turn-on signal (e.g., Q3_ON) of the first signal generating circuit 810, and when the operation mode of the converter 240 is switched from the buck-boost mode to the boost mode, the drive logic circuit 840 may output the second driving signals based on the basic signal (e.g., Q0) of the PWM control circuit 830, the turn-on signal (e.g., Q3_ON) of the first signal generating circuit 810, and the BOOST_ENA signal.

Referring to FIG. 11, an embodiment in which the electronic device 101 includes the second signal generating circuit 820 may be understood. In FIG. 11, when the operation mode of the converter 240 is switched from the buck mode to the buck-boost mode, the drive logic circuit 840 may output the first driving signals based on the basic signal (e.g., Q0) of the PWM control circuit 830 and the BB_ENA signal, and when the operation mode of the converter 240 is switched from the buck-boost mode to the boost mode, the drive logic circuit 840 may output the second driving signals based on the basic signal (e.g., Q0) of the PWM control circuit 830, the BB_ENA signal, and the extension signal (e.g., Q1_EXT) of the second signal generating circuit 820.

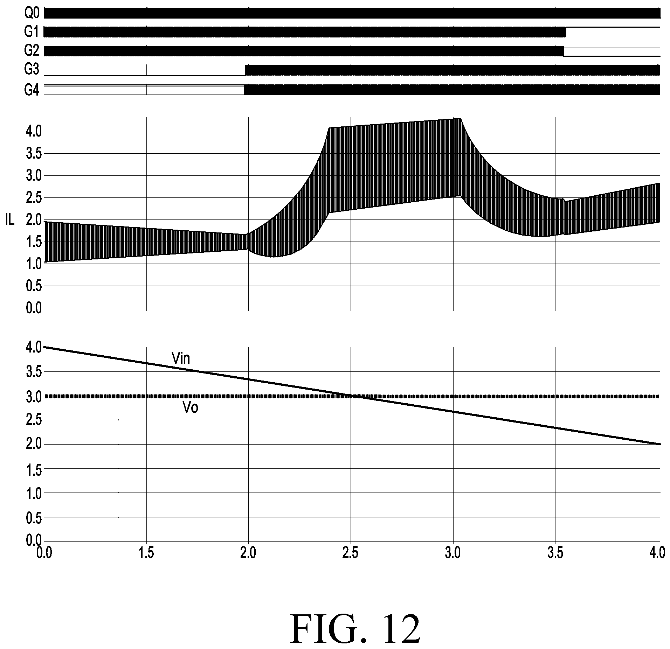

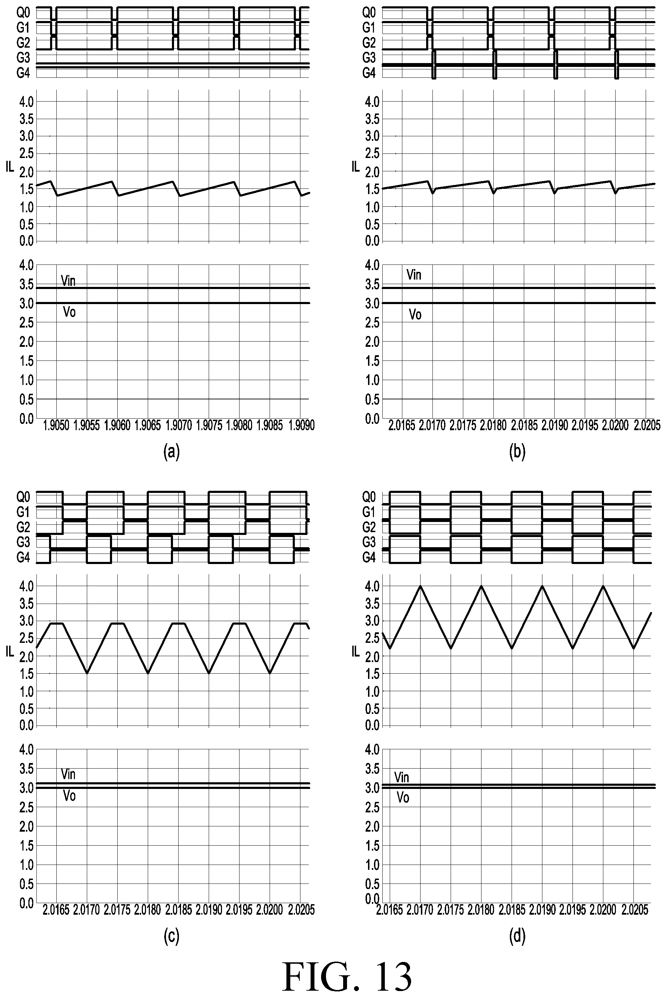

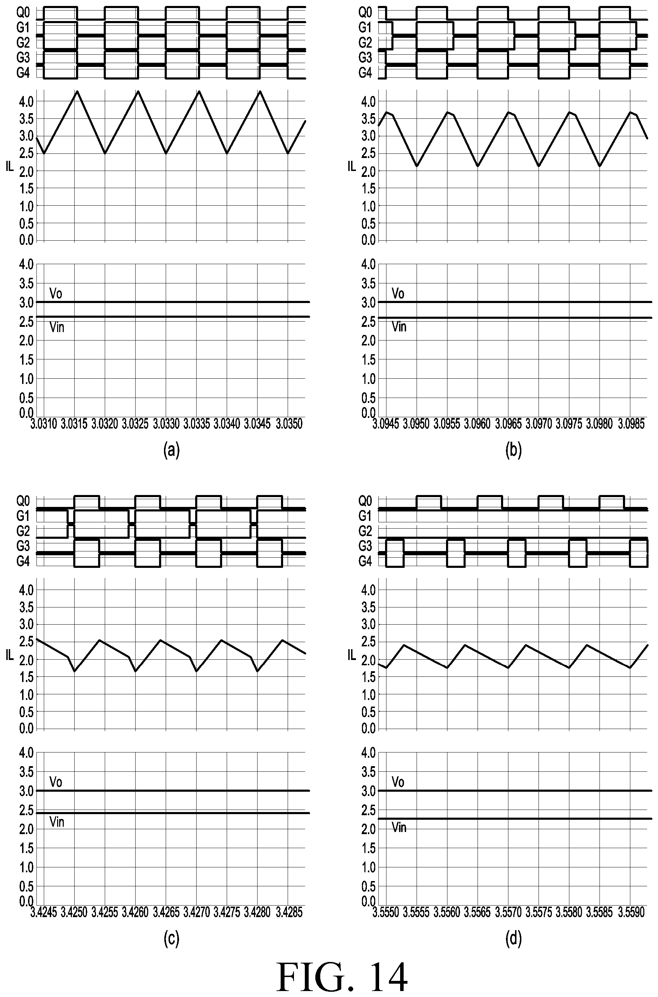

FIG. 12 is a diagram illustrating an operation of an electronic device according to an embodiment. FIG. 13 is a diagram illustrating an operation of an electronic device according to an embodiment. FIG. 14 is a diagram illustrating an operation of an electronic device according to an embodiment.

FIG. 12 is a graph illustrating that ripple is reduced in the current (e.g., IL) of the at least one inductor 445 of the converter 240 based on the first soft transition mode corresponding to the turn-on signal (e.g., Q3_ON) and the second soft transition mode corresponding to the extension signal (e.g., Q1_EXT).

FIG. 13 is a graph illustrating a process in which the operation mode of the converter 240 is gradually switched from the buck mode (e.g., (a) of FIG. 13) to the buck-boost mode (e.g., (d) of FIG. 13) based on the first soft transition mode corresponding to the turn-on signal (e.g., Q3_ON). While switching occurs in the order of (a), (b), (c), and (d) of FIG. 13, the ripple of the output voltage (e.g., Vo) of the converter 240 may be reduced.

FIG. 14 is a graph illustrating a process in which the operation mode of the converter 240 is gradually switched from the buck-boost mode (e.g., (a) of FIG. 14) to the boost mode (e.g., (d) of FIG. 14) based on the second soft transition mode corresponding to the extension signal (e.g., Q1_EXT). While switching occurs in the order of (a), (b), (c), and (d) of FIG. 14, the ripple of the output voltage (e.g., Vo) of the converter 240 may be reduced.

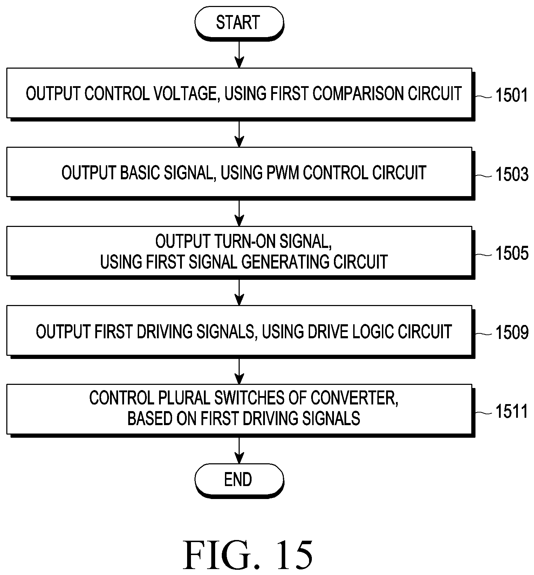

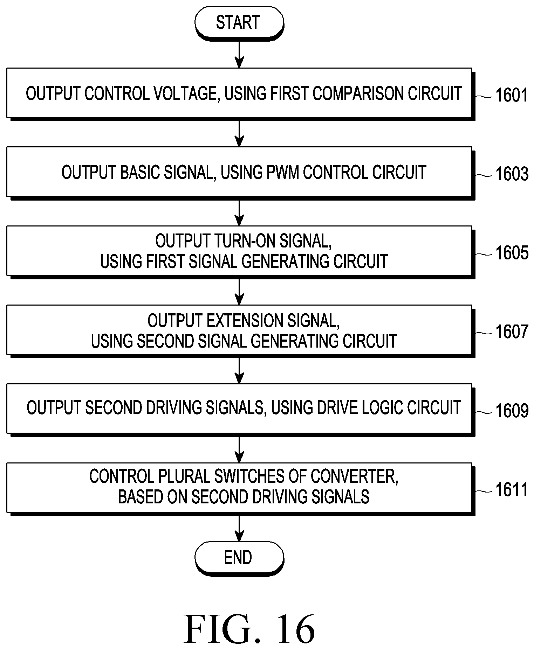

FIG. 15 is a flowchart illustrating a method for operating an electronic device according to an embodiment. FIG. 16 is a flowchart illustrating a method for operating an electronic device according to an embodiment. FIGS. 15 and 16 may be described with reference to the embodiments described before.

FIG. 15 illustrates an embodiment of outputting driving signals based on the turn-on signal (e.g., Q3_ON).

At least some of the operations in FIG. 15 may be omitted. The order of the operations in FIG. 15 may be changed. Operations other than those in FIG. 15 may be performed before, during, or after the operations in FIG. 15.

Referring to FIG. 15, in operation 1501, according to an embodiment, the electronic device 101 (e.g., the controller 260) may output a control voltage (e.g., Vc) using the first comparison circuit 851. The electronic device 101 may output the control voltage (e.g., Vc) based on an output voltage (e.g., Vo) of the converter 240 and a target voltage (e.g., Vt) of the output voltage, using the first comparison circuit 851. The output of the control voltage (e.g., Vc) may be understood based on the embodiments described before.

In operation 1503, according to an embodiment, the electronic device 101 (e.g., the controller 260) may output a basic signal (e.g., Q0) using the PWM control circuit 830. The electronic device 101 may output the basic signal (e.g., Q0) based on the control voltage (e.g., Vc) and a sawtooth wave (e.g., Vsaw). The output of the basic signal (e.g., Q0) may be understood based on the embodiments described before.

In operation 1505, according to an embodiment, the electronic device 101 (e.g., the controller 260) may output a turn-on signal (e.g., Q3_ON) using the first signal generating circuit 810. The electronic device 101 may output the turn-on signal (e.g., Q3_ON) based on the basic signal (e.g., Q0). The output of the turn-on signal (e.g., Q3_ON) may be understood based on the embodiments described before.

In operation 1507, according to an embodiment, the electronic device 101 (e.g., the controller 260) may output first driving signals using the drive logic circuit 840. The electronic device 101 may output the first driving signals based on the basic signal (e.g., Q0) and the turn-on signal (e.g., Q3_ON). The output of the first driving signals may be understood based on the embodiments described before.

In operation 1509, according to an embodiment, the electronic device 101 (e.g., the controller 260) may control a plurality of switches (e.g., 441, 442, 443, and 444) of the converter 240 based on the first driving signals. Based on the first driving signals output based on the turn-on signal (e.g., Q3_ON), a duty cycle of at least some (e.g., 443 and 444) of the plurality of switches (e.g., 441, 442, 443, and 444) of the converter 240 may be gradually changed. Control of the plurality of switches (e.g., 441, 442, 443, and 444) of the converter 240 may be understood based on the embodiments described before.

FIG. 16 illustrates an embodiment of outputting driving signals based on a turn-on signal (e.g., Q3_ON) and an extension signal (e.g., Q1_EXT).

At least some of the operations in FIG. 16 may be omitted. The order of the operations in FIG. 16 may be changed. Operations other than those in FIG. 16 may be performed before, during, or after the operations in FIG. 16.

Referring to FIG. 16, in operation 1601, according to an embodiment, the electronic device 101 (e.g., the controller 260) may output a control voltage (e.g., Vc) using the first comparison circuit 851. The electronic device 101 may output the control voltage (e.g., Vc) based on an output voltage (e.g., Vo) of the converter 240 and a target voltage (e.g., Vt) of the output voltage, using the first comparison circuit 851. The output of the control voltage (e.g., Vc) may be understood based on the embodiments described before.

In operation 1603, according to an embodiment, the electronic device 101 (e.g., the controller 260) may output a basic signal (e.g., Q0) using the PWM control circuit 830. The electronic device 101 may output the basic signal (e.g., Q0) based on the control voltage (e.g., Vc) and a sawtooth wave (e.g., Vsaw). The output of the basic signal (e.g., Q0) may be understood based on the embodiments described before.

In operation 1605, according to an embodiment, the electronic device 101 (e.g., the controller 260) may output a turn-on signal (e.g., Q3_ON) using the first signal generating circuit 810. The electronic device 101 may output the turn-on signal (e.g., Q3_ON) based on the basic signal (e.g., Q0). The output of the turn-on signal (e.g., Q3_ON) may be understood based on the embodiments described before.

In operation 1607, according to an embodiment, the electronic device 101 (e.g., the controller 260) may output an extension signal (e.g., Q1_EXT) using the second signal generating circuit 820. The electronic device 101 may output the extension signal (e.g., Q1_ EXT) based on an inversion (e.g., Q0-) of the basic signal (e.g., Q0). The output of the extension signal (e.g., Q1_EXT) may be understood based on the embodiments described before.

In operation 1609, according to an embodiment, the electronic device 101 (e.g., the controller 260) may output second driving signals using the drive logic circuit 840. The electronic device 101 may output the second driving signals based on the basic signal (e.g., QO), the turn-on signal (e.g., Q3_ON), and the extension signal (e.g., Q1_EXT). The output of the second driving signals may be understood based on the embodiments described before.

In operation 1611, according to an embodiment, the electronic device 101 (e.g., the controller 260) may control a plurality of switches (e.g., 441, 442, 443, and 444) of the converter 240 based on the second driving signals. Based on the second driving signals output based on the turn-on signal (e.g., Q3_ON) and the extension signal (e.g., Q1_EXT), a duty cycle of at least some (e.g., 441 and 442) of the plurality of switches (e.g., 441, 442, 443, and 444) of the converter 240 may be gradually changed. Control of the plurality of switches (e.g., 441, 442, 443, and 444) of the converter 240 may be understood based on the embodiments described before.

Those skilled in the art will understand that the embodiments described herein may be cross-applied within an applicable range. For example, those skilled in the art will understand that at least some operations of one embodiment described herein may be omitted and applied, or at least some operations of embodiments may be applied in conjunction with each other.

The technical objects to be achieved in the disclosure are not limited to the technical objects mentioned above, and other technical objects not mentioned will be clearly understood by those skilled in the art from the following description.

The effects that may be obtained in the disclosure are not limited to the effects mentioned above, and other effects not mentioned will be clearly understood by those skilled in the art from the following description.

According to an embodiment, the electronic device 101 may include the battery 230, the load 250, the converter 240 configured to provide power to the load 250 based on power provided from the battery 230, the first comparison circuit 851, the PWM control circuit 830, the first signal generating circuit 810, the drive logic circuit 840, and the controller 120 or 260. The controller 120 or 260 may be configured to output, using the first comparison circuit 851, a control voltage, based on an output voltage of the converter 240 and a target voltage of the output voltage. The controller 120 or 260 may be configured to output, using the PWM control circuit 830, a basic signal, based on the control voltage and a sawtooth wave. The controller 120 or 260 may be configured to output, using the first signal generating circuit 810, a turn-on signal, based on the basic signal. The controller 120 or 260 may be configured to output, using the drive logic circuit 840, first driving signals, based on the basic signal and the turn-on signal. The controller 120 or 260 may be configured to control, based on the first driving signals, the plurality of switches 441, 442, 443, and 444 of the converter 240.

According to an embodiment, the controller 120 or 260 may be configured to output the turn-on signal, using the first signal generating circuit 810, based on an input voltage of the converter 240 being less than a sum of the output voltage and a first reference voltage.

According to an embodiment, a duty cycle of the turn-on signal may be determined based on a value obtained by subtracting the input voltage from the sum of the output voltage and the first reference voltage.

According to an embodiment, the first signal generating circuit 810 may include the first limiter 812 and the first one-shot vibrator 811. The first limiter 812 may be configured to output a first output signal based on a first value obtained by subtracting the input voltage from the sum of the output voltage and the first reference voltage. The first one-shot vibrator 811 may be configured to output the turn-on signal based on the first output signal and the basic signal. The first output signal may be proportional to the first value, based on the first value exceeding 0 and being less than or equal to a first reference value. The first output signal may be proportional to the first reference value, based on the first value exceeding the first reference value.

According to an embodiment, the electronic device 101 may further include the second signal generating circuit 820. The controller 120 or 260 may be configured to output, using the second signal generating circuit 820, an extension signal, based on inversion of the basic signal. The controller 120 or 260 may be configured to output, using the drive logic circuit 840, second driving signals, based on the basic signal, the turn-on signal, and the extension signal. The controller 120 or 260 may be configured to control, based on the second driving signals, the plurality of switches 441, 442, 443, and 444 of the converter 240.

According to an embodiment, the controller 120 or 260 may be configured to output the extension signal, using the second signal generating circuit 820, based on an input voltage of the converter 240 being less than a value obtained by subtracting a second reference voltage from the output voltage.

According to an embodiment, a duty cycle of the extension signal may be determined based on a value obtained by subtracting the input voltage from the value obtained by subtracting the second reference voltage from the output voltage.

According to an embodiment, the second signal generating circuit 820 may include the second limiter 822 and the second one-shot vibrator 821. The second limiter 822 may be configured to output a second output signal based on a second value obtained by subtracting the input voltage from the value obtained by subtracting the second reference voltage from the output voltage. The second one-shot vibrator 821 may be configured to output the extension signal based on the second output signal and the inversion of the basic signal. The second output signal may be proportional to the second value, based on the second value exceeding 0 and being less than or equal to a second reference value. The second output signal may be proportional to the second reference value, based on the second value exceeding the second reference value.

According to an embodiment, the converter 240 may include the first switch 441, the second switch 442, the third switch 443, the fourth switch 444, and an inductor. A first end of the first switch 441 may be electrically connected to the battery 230. A first end of the second switch 442 may be electrically connected to a second end of the first switch 441. A second end of the second switch 442 may be electrically connected to a ground. A first end of the third switch 443 may be electrically connected to the load 250. A first end of the fourth switch 444 may be electrically connected to a second end of the third switch 443. A second end of the fourth switch 444 may be electrically connected to the ground. A first end of the inductor may be electrically connected to the second end of the first switch 441. A second end of the inductor may be electrically connected to the second end of the third switch 443.

According to an embodiment, the drive logic circuit 840 may include an AND gate configured to output a driving signal corresponding to the third switch 443 based on the basic signal and the turn-on signal.

According to an embodiment, a method for operating the electronic device 101 may include outputting a control voltage based on an output voltage of the converter 240 of the electronic device 101 and a target voltage of the output voltage. The method may include outputting a basic signal based on the control voltage and a sawtooth wave. The method may include outputting a turn-on signal based on the basic signal. The method may include outputting first driving signals based on the basic signal and the turn-on signal. The method may include controlling the plurality of switches 441, 442, 443, and 444 of the converter 240 based on the first driving signals.

According to an embodiment, outputting the turn-on signal may include outputting the turn-on signal, based on an input voltage of the converter 240 being less than a sum of the output voltage and a first reference voltage.

According to an embodiment, a duty cycle of the turn-on signal may be determined based on a value obtained by subtracting the input voltage from the sum of the output voltage and the first reference voltage.

According to an embodiment, outputting the turn-on signal may include outputting a first output signal based on a first value obtained by subtracting the input voltage from the sum of the output voltage and the first reference voltage. Outputting the turn-on signal may include outputting the turn-on signal based on the first output signal and the basic signal. The first output signal may be proportional to the first value, based on the first value exceeding 0 and being less than or equal to a first reference value. The first output signal may be proportional to the first reference value, based on the first value exceeding the first reference value.

According to an embodiment, the method may include outputting an extension signal based on inversion of the basic signal. The method may include outputting second driving signals based on the basic signal, the turn-on signal, and the extension signal. The method may include controlling the plurality of switches 441, 442, 443, and 444 of the converter 240 based on the second driving signals.

According to an embodiment, outputting the extension signal may include outputting the extension signal, based on an input voltage of the converter 240 being less than a value obtained by subtracting a second reference voltage from the output voltage.

According to an embodiment, a duty cycle of the extension signal may be determined based on a value obtained by subtracting the input voltage from the value obtained by subtracting the second reference voltage from the output voltage.

According to an embodiment, outputting the extension signal may include outputting a second output signal based on a second value obtained by subtracting the input voltage from the value obtained by subtracting the second reference voltage from the output voltage. Outputting the extension signal may include outputting the extension signal based on the second output signal and the inversion of the basic signal. The second output signal may be proportional to the second value, based on the second value exceeding 0 and being less than or equal to a second reference value. The second output signal may be proportional to the second reference value, based on the second value exceeding the second reference value.

According to an embodiment, the converter 240 may include the first switch 441, the second switch 442, the third switch 443, the fourth switch 444, and an inductor. A first end of the first switch 441 may be electrically connected to the battery 230. A first end of the second switch 442 may be electrically connected to a second end of the first switch 441. A second end of the second switch 442 may be electrically connected to a ground. A first end of the third switch 443 may be electrically connected to the load 250. A first end of the fourth switch 444 may be electrically connected to a second end of the third switch 443. A second end of the fourth switch 444 may be electrically connected to the ground. A first end of the inductor may be electrically connected to the second end of the first switch 441. A second end of the inductor may be electrically connected to the second end of the third switch 443.

According to an embodiment, the drive logic circuit 840 may include an AND gate configured to output a driving signal corresponding to the third switch 443 based on the basic signal and the turn-on signal.

According to an embodiment, in a computer-readable recording medium storing instructions configured to cause the controller 120 or 260 of the electronic device 101 to perform at least one operation, the at least one operation may include outputting a control voltage based on an output voltage of the converter 240 of the electronic device 101 and a target voltage of the output voltage. The at least one operation may include outputting a basic signal based on the control voltage and a sawtooth wave. The at least one operation may include outputting a turn-on signal based on the basic signal. The at least one operation may include outputting first driving signals based on the basic signal and the turn-on signal. The at least one operation may include controlling the plurality of switches 441, 442, 443, and 444 of the converter 240 based on the first driving signals.

According to an embodiment, outputting the turn-on signal may include outputting the turn-on signal, based on an input voltage of the converter 240 being less than a sum of the output voltage and a first reference voltage.

According to an embodiment, a duty cycle of the turn-on signal may be determined based on a value obtained by subtracting the input voltage from the sum of the output voltage and the first reference voltage.

According to an embodiment, outputting the turn-on signal may include outputting a first output signal based on a first value obtained by subtracting the input voltage from the sum of the output voltage and the first reference voltage. Outputting the turn-on signal may include outputting the turn-on signal based on the first output signal and the basic signal. The first output signal may be proportional to the first value, based on the first value exceeding 0 and being less than or equal to a first reference value. The first output signal may be proportional to the first reference value, based on the first value exceeding the first reference value.

According to an embodiment, the at least one operation may include outputting an extension signal based on inversion of the basic signal. The at least one operation may include outputting second driving signals based on the basic signal, the turn-on signal, and the extension signal. The at least one operation may include controlling the plurality of switches 441, 442, 443, and 444 of the converter 240 based on the second driving signals.

According to an embodiment, outputting the extension signal may include outputting the extension signal, based on an input voltage of the converter 240 being less than a value obtained by subtracting a second reference voltage from the output voltage.

According to an embodiment, a duty cycle of the extension signal may be determined based on a value obtained by subtracting the input voltage from the value obtained by subtracting the second reference voltage from the output voltage.

According to an embodiment, outputting the extension signal may include outputting a second output signal based on a second value obtained by subtracting the input voltage from the value obtained by subtracting the second reference voltage from the output voltage. Outputting the extension signal may include outputting the extension signal based on the second output signal and the inversion of the basic signal. The second output signal may be proportional to the second value, based on the second value exceeding 0 and being less than or equal to a second reference value. The second output signal may be proportional to the second reference value, based on the second value exceeding the second reference value.

According to an embodiment, the converter 240 may include the first switch 441, the second switch 442, the third switch 443, the fourth switch 444, and an inductor. A first end of the first switch 441 may be electrically connected to the battery 230. A first end of the second switch 442 may be electrically connected to a second end of the first switch 441. A second end of the second switch 442 may be electrically connected to a ground. A first end of the third switch 443 may be electrically connected to the load 250. A first end of the fourth switch 444 may be electrically connected to a second end of the third switch 443. A second end of the fourth switch 444 may be electrically connected to the ground. A first end of the inductor may be electrically connected to the second end of the first switch 441. A second end of the inductor may be electrically connected to the second end of the third switch 443.

According to an embodiment, the drive logic circuit 840 may include an AND gate configured to output a driving signal corresponding to the third switch 443 based on the basic signal and the turn-on signal.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1^{st}" and "2^{nd}", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., a program) including one or more instructions that are stored in a storage medium that is readable by a machine (e.g., an electronic device). For example, a processor (e.g., a controller) of the machine may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device (101) comprising:
a battery (230);
a load (250);
a converter (240) configured to provide power to the load (250) based on power provided from the battery (230);
a first comparison circuit (851);
a pulse width modulation (PWM) control circuit (830);
a first signal generating circuit (810);
a drive logic circuit (840); and
a controller (120; 260),
wherein the controller (120; 260) is configured to:
output, using the first comparison circuit (851), a control voltage, based on an output voltage of the converter (240) and a target voltage of the output voltage,
output, using the PWM control circuit (830), a basic signal, based on the control voltage and a sawtooth wave,
output, using the first signal generating circuit (810), a turn-on signal, based on the basic signal,
output, using the drive logic circuit (840), first driving signals, based on the basic signal and the turn-on signal, and
control, based on the first driving signals, a plurality of switches (441; 442; 443; 444) of the converter (240).

2. The electronic device (101) of claim 1, wherein the controller (120; 260) is configured to output the turn-on signal, using the first signal generating circuit (810), based on an input voltage of the converter (240) being less than a sum of the output voltage and a first reference voltage.

3. The electronic device (101) of claim 1 or 2, wherein a duty cycle of the turn-on signal is determined based on a value obtained by subtracting the input voltage from the sum of the output voltage and the first reference voltage.

4. The electronic device (101) of any one of claims 1 to 3, wherein the first signal generating circuit (810) includes a first limiter (812) and a first one-shot vibrator (811),
wherein the first limiter (812) is configured to output a first output signal based on a first value obtained by subtracting the input voltage from the sum of the output voltage and the first reference voltage,
wherein the first one-shot vibrator (811) is configured to output the turn-on signal based on the first output signal and the basic signal,
wherein the first output signal is proportional to the first value, based on the first value exceeding 0 and being less than or equal to a first reference value, and
wherein the first output signal is proportional to the first reference value, based on the first value exceeding the first reference value.

5. The electronic device (101) of any one of claims 1 to 4, further comprising a second signal generating circuit (820),
wherein the controller (120; 260) is configured to:
output, using the second signal generating circuit (820), an extension signal, based on inversion of the basic signal,
output, using the drive logic circuit (840), second driving signals, based on the basic signal, the turn-on signal, and the extension signal, and
control, based on the second driving signals, the plurality of switches (441; 442; 443; 444) of the converter (240).

6. The electronic device (101) of any one of claims 1 to 5, wherein the controller (120; 260) is configured to output the extension signal, using the second signal generating circuit (820), based on an input voltage of the converter (240) being less than a value obtained by subtracting a second reference voltage from the output voltage.

7. The electronic device (101) of any one of claims 1 to 6, wherein a duty cycle of the extension signal is determined based on a value obtained by subtracting the input voltage from the value obtained by subtracting the second reference voltage from the output voltage.

8. The electronic device (101) of any one of claims 1 to 7, wherein the second signal generating circuit (820) includes a second limiter (822) and a second one-shot vibrator (821),
wherein the second limiter (822) is configured to output a second output signal based on a second value obtained by subtracting the input voltage from the value obtained by subtracting the second reference voltage from the output voltage,
wherein the second one-shot vibrator (821) is configured to output the extension signal based on the second output signal and the inversion of the basic signal,
wherein the second output signal is proportional to the second value, based on the second value exceeding 0 and being less than or equal to a second reference value, and
wherein the second output signal is proportional to the second reference value, based on the second value exceeding the second reference value.

9. The electronic device (101) of any one of claims 1 to 8, wherein the converter (240) includes a first switch (441), a second switch (442), a third switch (443), a fourth switch (444), and an inductor,
wherein a first end of the first switch (441) is electrically connected to the battery (230),
wherein a first end of the second switch (442) is electrically connected to a second end of the first switch (441),
wherein a second end of the second switch (442) is electrically connected to a ground,
wherein a first end of the third switch (443) is electrically connected to the load (250),
wherein a first end of the fourth switch (444) is electrically connected to a second end of the third switch (443),
wherein a second end of the fourth switch (444) is electrically connected to the ground,
wherein a first end of the inductor is electrically connected to the second end of the first switch (441), and
wherein a second end of the inductor is electrically connected to the second end of the third switch (443).

10. The electronic device (101) of any one of claims 1 to 9, wherein the drive logic circuit (840) includes an AND gate configured to output a driving signal corresponding to the third switch (443) based on the basic signal and the turn-on signal.

11. A method for operating an electronic device (101), comprising:
outputting a control voltage based on an output voltage of a converter (240) of the electronic device (101) and a target voltage of the output voltage,
outputting a basic signal based on the control voltage and a sawtooth wave,
outputting a turn-on signal based on the basic signal,
outputting first driving signals based on the basic signal and the turn-on signal, and
controlling a plurality of switches (441; 442; 443; 444) of the converter (240) based on the first driving signals.

12. The method of claim 11, wherein outputting the turn-on signal includes outputting the turn-on signal, based on an input voltage of the converter (240) being less than a sum of the output voltage and a first reference voltage.

13. The method of claim 11 or 12, wherein a duty cycle of the turn-on signal is determined based on a value obtained by subtracting the input voltage from the sum of the output voltage and the first reference voltage.

14. A computer-readable recording medium storing instructions configured to cause a controller (120; 260) of an electronic device (101) to perform at least one operation,
wherein the at least one operation includes:
outputting a control voltage based on an output voltage of a converter (240) of the electronic device (101) and a target voltage of the output voltage,
outputting a basic signal based on the control voltage and a sawtooth wave,
outputting a turn-on signal based on the basic signal,
outputting first driving signals based on the basic signal and the turn-on signal, and
controlling a plurality of switches (441; 442; 443; 444) of the converter (240) based on the first driving signals.

15. The computer-readable recording medium of claim 14, wherein outputting the turn-on signal includes outputting the turn-on signal, based on an input voltage of the converter (240) being less than a sum of the output voltage and a first reference voltage.
